# EUROPÄISCHE PATENTSCHRIFT

(11) **EP 1 586 789 B1**
(45) Veröffentlichungstag und Bekanntmachung des Hinweises auf die Patenterteilung: **07.05.2014**
(21) Anmeldenummer: 05004492.4
(22) Anmeldetag: 02.03.2005
(51) Int. Cl.: F16F 1/38

(54) **Elastisches Fahrerhauslager**
Elastic support for a driver's cab
Support élastique pour une cabine de véhicule

(30) Priorität: 15.04.2004 DE 102004018241
(43) Veröffentlichungstag der Anmeldung: 19.10.2005
(73) Patentinhaber: Jörn GmbH, 71336 Waiblingen (DE); MAN Truck & Bus AG, 80995 München (DE)
(72) Erfinder: Zawadzki, Bernd, 71409 Schwaikheim (DE); Mursinsky, Jörg, 71364 Winnenden (DE); Wunderlich, Walter, 4441 Behamberg (AT); Täuber, Klemens, 4400 Steyr (AT); Schaffer, Friedrich, 82229 Seefeld (DE); Grosskopf, Rainer, 85368 Moosburg (DE)
(74) Vertreter: Liebl, Thomas

(56) Entgegenhaltungen:
- EP-A- 0 525 435
- DE-A1- 19 517 640
- DE-U- 7 141 159
- DE-U1- 20 304 434
- US-A- 5 620 261
- US-A- 5 842 687

## Beschreibung

Die Erfindung betrifft ein elastisches Fahrerhauslager für ein schwenkbares Fahrerhaus eines Nutzfahrzeuges nach dem Oberbegriff des Anspruches 1.

Ein bekanntes gattungsgemäßes elastisches Lager (DE 28 16 742 C2, Fig. 7 bis 10) besteht aus einem Elastomer-Festkörperteil als Gummimetallteil mit einem Innen-Festkörperteil als innerem Metallteil und aus einem rohrförmigen Lagergehäuse, wobei das innere Metallteil und das Lagergehäuse der Krafteinleitung und Kraftausleitung dienen. Das Gummimetallteil weist zudem eine Außenschale auf, wobei zwischen der Außenschale und dem inneren Metallteil Elastomerkörper als Gummikörper festhaftend angeordnet sind. Der Außendurchmesser des Gummimetallteils ist im Herstellzustand zumindest in Teilbereichen größer als der Innendurchmesser des Lagergehäuses, so dass das Gummimetallteil im fertig montierten Montagezustand unter radialer Vorspannung in das Lagergehäuse eingepresst ist.

Das elastische Lager mit einem prismatischen inneren Metallteil und einem zylindrischen Lagergehäuse ausgebildet. Die Elastomerkörper liegen einander gegenüber und am inneren Metallteil sind versetzt zu den Elastomerkörpern Elastomeranschläge als Längsstege festhaftend angeordnet. Im Einbauzustand im Fahrzeug liegt die Lagerachse etwa horizontal und im statisch mit dem Fahrerhaus belasteten Zustand liegt die Längsmitte des inneren Metallteils im Bereich der Lagerachse. Zudem haben in diesem Zustand die Elastomeranschläge einen Anschlag-Abstand zur Lagergehäuseinnenwand und/oder zur Außenschaleninnenwand. Lagerbewegungen innerhalb dieses Abstands werden molekular in den Elastomerkörpern aufgenommen, bei größeren Lagerauslenkungen kommt jeweils ein Elastomeranschlag zur Wirkung. Die Elastomerkörper und die Elastomeranschläge sind vulkanisierte Gummikörper.

Solche elastischen Lager werden im Fahrzeugbau an unterschiedlichen Lagerstellen, wie beispielsweise als Motorlager, Getriebelager oder Hinterachs-Hilfsträgerlager eingesetzt.

Zudem ist es allgemein bekannt ähnliche, gattungsgemäße elastische Lager in einer modifizierten Ausführung für eine vordere Lagerung eines schwenkbaren Fahrerhauses eines Lastkraftwagens einzusetzen, wobei die Lagerachse etwa horizontal liegt. In einer axialen Bohrung des inneren Metallteils ist ein Kunststoffrohr montiert, in das ein Achsbolzen der Schwenkachse für das Fahrerhaus eingesteckt ist.

Die Kunststoffrohrinnenfläche gleitet hier leichtgängig und wartungsfrei auf der Achsbolzenaußenfläche. Zudem wird der Achsbolzen klapperfrei im Kunststoffrohr und dieses wiederum in der Bohrung des inneren Metallteils gehalten. Ohne Kunststoffrohr wäre der metallische Achsbolzen direkt in einer Bohrung des inneren Metallteils aufgenommen, was wegen der ersichtlichen Probleme hinsichtlich der Korrosion, der Leichtgängigkeit und der Fahrzeugakustik nicht möglich ist. Ein solches Kunststoffrohr ist jedoch ein Lagerbauteil zusätzlich zum inneren Metallteil, so dass ein solches Fahrerhauslager in der Herstellung und Montage relativ teuer ist. Zudem sollte das Gewicht reduziert werden.

Dieses bekannte elastische Fahrerhauslager weist im Herstellzustand zwei zylindrisch geformte Außenhalbschalen auf, welche einen Außenradius entsprechend dem Innenradius des Lagergehäuses aufweisen und jeweils durch Längsspalte, welche versetzt zu den Gummikörpern liegen, voneinander beabstandet sind. Beim Einpressen des Gummimetallteils in das Lagergehäuse werden durch radiale Vorspannung der Gummikörper die beiden Außenhalbschalen so zusammengeführt, dass die Längsspalte geschlossen werden und deren Spaltränder aneinander liegen sowie in den zwischen den Elastomerkörpern aneinanderliegenden Außenschalenteilbereichen eine radial nach außen wirkende Vorspannung zur Gehäuseanlagefläche hin aufgebaut wird. Es sind auch Modifikationen zu dem vorstehend erläuterten elastischen Lager bekannt, bei denen insbesondere bei Fahrerhauslagern nur der untere Außenschalenteilbereich nach dem Einpressen des Gummimetallteils durch Aneinanderliegen der Ränder der beiden Außenhalbschalen geschlossen wird, gegenüber liegend dazu bleiben die Außenhalbschalen auch im eingepressten Montagezustand mit einem weiten Längsspalt offen.

Durch die radiale Vorspannung dieses Gelenklagers mit geteilten, an Rändern unter Vorspannung aneinander liegenden Außenschalenteilen besteht die Gefahr, dass das Gummimetallteil bei Lagerbewegungen axial auswandert, was insbesondere durch kleine Relativabstützbewegungen zwischen den aneinander liegenden Außenschalenrändern bei wechselnden Lagerbelastungsrichtungen auftreten kann. Entsprechend besteht auch die Gefahr, dass sich das Gummimetallteil im Lagergehäuse aus der vorgegebenen Solllage verdreht und/oder dass die Randkanten übereinander geführt werden.

Um solche unzulässigen Verlagerungen des Gummimetallteils im Lagergehäuse zu verhindern, sind regelmäßig zusätzliche Sicherungsmaßnahmen erforderlich. Bekannte Sicherungsmaßnahmen bestehen aus stirnseitig am Lagergehäuse verschraubten und radial in den Bereich des eingepressten Gummimetallteils vorstehenden Axialsicherungselementen, welche durch Schrauben oder Umbördeln fixiert sind und beispielsweise auch Bestandteile der Außenhalbschalen sein können.

Bei einem weiteren bekannten gattungsgemäßen elastischen Lager (DE 71 41 159 U) besteht das Innen-Festkörperteil aus einem dreiecksförmigen Blechrohr als Dreieck-Innenhülse, in dem ein Befestigungsbolzen kraftschlüssig aufgenommen ist. Eine Relativverdrehung zwischen dem Befestigungsbolzen und der Dreieck-Innenhülse, wie dies für den großen Schwenkwinkel zum Aufklappen und Verschwenken eines Fahrerhauses erforderlich ist, ist hier nicht vorgesehen.

Zudem ist ein elastisches Lager als zylindrisches Buchsenlager (US 5,620,261 A) mit einem in Radialrichtung symmetrischen Aufbau bekannt, welches für einfache Lageraufgaben geeignet ist, wobei Radialkräfte molekular mit in allen Radialrichtungen gleicher Federkonstante im Elastomerring aufgenommen werden und Verdrehkräfte relativ kraftfrei durch eine Gleitbewegung zwischen einem inneren Metallrohr und einem darauf gleitenden Kunststoffrohr aufgenommen werden.

Bei einem weiteren bekannten elastischen Lager (DE 195 17 640 A1) sind in den Elastomerkörpern nierenförmige Ausnehmungen zur Reduzierung örtlicher Spannungsspitzen vorgesehen, wobei das Innen-Festkörperteil aus Kunststoff zur Aufnahme eines Achsbolzens hergestellt sein kann.

Aufgabe der Erfindung ist es, ein gattungsgemäßes elastisches Fahrerhauslager so weiterzubilden, dass bei einfachem kostengünstigen und gewichtsgünstigen Lageraufbau eine leichtgängige Schwenkung eines Fahrerhauses bei reduzierter Korrosionsbelastung des Lagers, hoher Lagerlebensdauer und klapperfreier Lagerung sowie geeigneter Anschlagfunktion der Elastomeranschläge möglich ist.

Diese Aufgabe wird mit den Merkmalen des Anspruchs 1 gelöst.

Gemäß Anspruch 1 ist das Innen-Festkörperteil aus Kunststoff als Innen-Kunststoffteil hergestellt mit einer Bohrung, in der unmittelbar der Achsbolzen für das schwenkbare Fahrerhaus aufgenommen ist mit einer Gleitfläche zwischen der metallischen Achsbolzenumfangsfläche und der Bohrungsinnenfläche als Kunststofffläche. Die Elastomerkörper und die Elastomeranschläge sind hier unmittelbar am Innen-Kunststoffteil festhaftend angebracht, bevorzugt als Gummiteile anvulkanisiert.

Die erforderliche klapperfreie Halterung des Achsbolzens im Lagerinnenteil sowie gute Gleiteigenschaften für eine leichtgängige Schwenkbewegung werden hier vorteilhaft ohne ein zusätzliches Kunststoffrohr erhalten, indem das Innen-Festkörperteil selbst insgesamt aus Kunststoff hergestellt ist. Weitere Vorteile ergeben sich durch das vergleichsweise geringere Lagergewicht und weiter reduzierte Korrosionsprobleme. Zudem sind die Herstell- und Montagekosten reduziert und die Lagerlebensdauer ist erhöht.

Weiter ist gemäß Anspruch 1 am Innen-Kunststoffteil für die Elastomeranschläge jeweils ein im Einbauzustand nach oben bzw. unten weisender offener Längskanal mit schrägen Kanalseitenwänden als Anlageschultern für das Elastomermaterial eines verformten Elastomeranschlags ausgeformt. In einem solchen Längskanal liegt der jeweils walmdachförmig ausgebildete Elastomeranschlag ein und ist am Kanalboden angehaftet. Damit wird erreicht, dass nach einem jeweils freien Federweg, vorzugsweise von ca. 5 bis 6 mm der Anschlag in seine Wirkstellung kommt, wobei die Federkennung des Anschlags mit einem weichen übergangslosen Einlauf beginnt, indem zunächst die pyramidenförmige Spitze/Linie der Walmdachform wirkt und bei weiterer Einfederung schnell eine Erhöhung der belasteten Flächen erfolgt. Im weiteren Anschlagweg mit zunehmender größerer Anschlagmaterialverformung füllt sich der Kanalinnenraum mit Elastomermaterial, welches sich an den schrägen Kanalseitenwänden in der Art von Anlageschultern abstützt und seitlich nicht mehr verdrängt werden kann, so dass die Federkennung des Elastomeranschlags stark progressiv ansteigt. Diese Maßnahme trägt wesentlich dazu bei, dass die vorzugsweise als 6-Hz-Lagerung ausgelegte Lagerstelle ohne zusätzlichen Dämpfer auskommt, so dass die Lagerstelle vergleichsweise kostengünstig zu realisieren ist.

Solche Fahrerhauslager sind vorzugsweise für leichtere Fahrerhäuser bzw. relativ leichte Lastkraftwagen einsetzbar.

Der vorstehend verwendete Begriff "Festkörper" soll bedeuten, dass das entsprechende Festkörpermaterial im Vergleich zum Elastomermaterial wesentlich weniger verformbar, d. h. bei den auftretenden Kräften nahezu unverformbar ist.

Bei Verwendung des erfindungsgemäßen Kunststoff-Innenteils ist jedoch zu berücksichtigen, dass sich dieses aufgrund der Materialeigenschaften des Kunststoffs im Gegensatz zu einem stabilen Metallteil beim Einpressen in das Lagergehäuse durch den sich aufbauenden Elastomerdruck der Elastomerkörper etwas verformen kann. Dies kann dazu führen, dass die Aufnahmebohrung für den Achsbolzen dann oval verformt wird. Dadurch kann möglicherweise der Achsbolzen nach der Montage verklemmen, so dass keine leichtgängige Schwenkbewegung für das Fahrerhaus gegeben ist. Als Gegenmaßnahme kann hier vorgesehen werden, die Bohrung bei aufgebrachter Elastomervorspannung zylindrisch dem Durchmesser des Achsbolzens angepasst auszureiben.

In einer bevorzugten Weiterbildung nach Anspruch 2 ist auch die Außenschale aus Kunststoff als Kunststoffaußenschale hergestellt. Dies trägt zu einer weiteren Kostenreduzierung bei. Vorteilhaft kann auf jegliche Korrosionsschutzmaßnahme verzichtet werden.

Gemäß Anspruch 3 ist wenigstens ein Außenschalenteilbereich zwischen den Elastomerkörpern durchgehend geschlossen ausgebildet. Dieser Außenschalenteilbereich ist im Herstellzustand des Elastomermetallteils mit einer flacheren Auswölbung im Vergleich zur Innenwölbung des zugeordneten Lagergehäuseteilbereichs ausgebildet dergestalt, dass im eingepressten Montagezustand bei aufgebrachter Vorspannung die Anbindungsstellen des Außenschalenteilbereichs an den Elastomerkörpern so relativ aufeinander zu verlagert sind, dass damit der Außenschalenteilbereich im Vergleich zum Herstellzustand weiter ausgewölbt ist und unter Vorspannung angepasst an die Innenwölbung am zugeordneten Lagergehäuseteilbereich anliegt.

Damit wird vorteilhaft einerseits die für eine gute Lagerfunktion erforderliche radiale Vorspannung bei der Anlage des Außenschalenteilbereichs zum zugeordneten Lagergehäuseteilbereich hin aufgebracht. Andererseits liegt aber keine Teilung in diesem Außenschalenteilbereich wie im Stand der Technik vor, so dass im eingepressten Montagezustand unter Vorspannung aneinander liegende Außenschalenlängsränder vermieden werden, welche bei den vorbekannten Ausführungen bei wechselnden Belastungsrichtungen über wechselnde Abstützkräfte und kleinere Relativbewegungen ein axiales Auswandern und Verdrehen des Elastomermetallteils im Lagergehäuse aus einer Soll-Position begünstigen. Auch ein fehlerhaftes Überlappen der Außenschalenränder, welches auch bei einem unfachmännischen Einpressvorgang erfolgen kann, ist bei dem erfindungsgemäß geschlossenen Außenschalenteilbereich nicht mehr möglich. Aufgrund dieser verbesserten Lagestabilisierung des Elastomermetallteils im Lagergehäuse kann ggf. auf zusätzliche Sicherungsmaßnahmen zur Verhinderung von axialen Auswanderbewegungen oder Verdrehungen verzichtet werden.

Gemäß Anspruch 4 kann je nach den Gegebenheiten und dem konkreten Einsatz eines elastischen Fahrerhauslagers nur ein unterer Außenschalenteilbereich zwischen den gegenüberliegenden Elastomerkörpern durchgehend geschlossen sein, wobei der gegenüberliegende Außenschalenteilbereich auch im eingepressten Montagezustand ohne aneinanderliegender Außenschalenränder weit offen verbleibt. Für die Außenschale ist hier somit nur ein einziges Schalenteil als Kunststoffteil erforderlich, was zu günstigen Herstellungskosten führt.

In einer bevorzugten Ausführungsform nach Anspruch 5 ist das Lagergehäuse kreiszylindrisch ausgeführt, wobei die Außenschalenform im Bereich der Elastomerkörper entsprechend einem Zylinderabschnitt ausgebildet ist. Der geschlossene Außenschalenteilbereich hat dabei im Herstellzustand des Elastomermetallteils eine geringere Auswölbung als die durch den Radius des zylindrischen Lagergehäuses vorgegebene Auswölbung. Erst beim Einpressen des Elastomermetallteils in das Lagergehäuse wird dann der Außenschalenteilbereich unter Vorspannung entsprechend zylindrisch weiter ausgewölbt und gegen die zylindrische Anlagefläche des Lagergehäuses gepresst.

Grundsätzlich ist die Maßnahme nicht auf zylindrische Lagergehäuse beschränkt, sondern kann beispielsweise je nach den Gegebenheiten auch bei einem elyptisch geformten Lagergehäuse verwendet werden.

In an sich bekannter Weise können die Elastomerkörper nach Anspruch 6 für eine Vergleichmäßigung des Spannungsverlaufs mehrlagig ausgeführt sein und Zwischenbleche und/oder Kunststoff-Zwischenplatten enthalten.

Zweckmäßig werden nach Anspruch 7 als Elastomerkörper und als Elastomeranschläge vulkanisierte Gummikörper verwendet.

Bei Bedarf kann das Elastomer-Festkörperteil nach Anspruch 8 mittels einer Klipp- oder Schnappverbindung zwischen der Kunststoff-Außenschale und dem Lagergehäuse axial gesichert werden. Beispielsweise kann die Kunststoff-Außenschale wenigstens eine abstehende Rastnoppe aufweisen, die in eine zugeordnete Bohrung im Lagergehäuse einschnappt. In einer anderen Variante können an den Stirnseiten Schnapp-Verbindungen realisiert werden, indem beispielsweise die längere Außenschale mit nach außen abstehenden endseitigen Ringschultern über die Stirnseiten des kürzeren Lagergehäuses schnappt. Die bei Metall-Außenschalen bekannten Sicherungsmaßnahmen, z. B. umgebördelte Ecken sind jedenfalls bei den erfindungsgemäßen Kunststoff-Außenschalen nicht möglich.

Anhand einer Zeichnung wird die Erfindung näher erläutert.

Es zeigen:
- Fig. 1: ein Elastomer-Kunststoffteil im Herstellzustand in axialer Ansicht,
- Fig. 2: das Elastomer-Kunststoffteil nach Fig. 1 in einer Seitenansicht,
- Fig. 3: ein elastisches Fahrerhauslager mit dem in ein Lagergehäuse eingepressten Elastomer-Kunststoffteil bei betriebsmäßig statischer Belastung, und
- Fig. 4: eine Seitenansicht des Fahrerhauslagers nach Fig. 3.

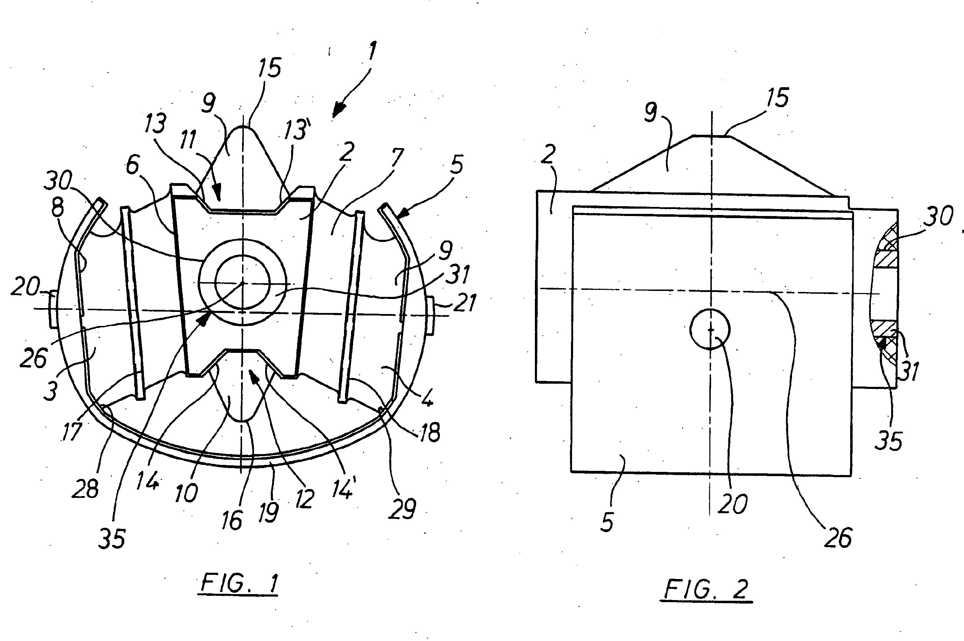

In Fig. 1 ist ein Elastomer-Kunststoffteil als Gummi-Kunststoffteil 1 im Herstellzustand in axialer Ansicht gezeigt, welches aus einem prismatischen Kunststoffinnenteil 2, aus zwei einander gegenüberliegenden Elastomerkörpern 3, 4 und einer Kunststoffaußenschale 5 besteht. Die Elastomerkörper 3, 4 sind schräg nach oben aufeinander zu weisend angestellt und sowohl mit etwa vertikal verlaufenden Stützflächen 6, 7 des Kunststoffinnenteils 2 sowie mit entsprechend zugeordneten Befestigungsflächen 8, 9 an der Innenseite der Kunststoffaußenschale 5 festhaftend verbunden. Die Elastomerkörper 3, 4 sind vorzugsweise festhaftend anvulkanisierte Gummikörper. Das Kunststoffmaterial der Kunststoffteile ist in seiner Konsistenz so gewählt, dass sich dieses bei den betriebsmäßig auftretenden Lagerkräften nahezu nicht verformt. Auf der Ober- und Unterseite des Kunststoffinnenteils 2 ist jeweils ein Elastomeranschlag als Gummianschlag 9, 10 festhaftend angebracht, vorzugsweise anvulkanisiert. Dazu ist am Kunststoffinnenteil 2 für die Gummianschläge 9, 10 jeweils ein nach oben bzw. unten weisender offener Längskanal 11, 12 mit schrägen Kanalseitenwänden als Anlageschultern 13, 13' und 14, 14' für das Gummimaterial eines verformten Gummianschlags 9' ausgeformt. Die Gummianschläge 9, 10 sind, wie insbesondere aus Fig. 2 ersichtlich, walmdachförmig bzw. pyramidenförmig ausgeführt mit jeweils einer pyramidenförmigen Spitze/Linie 15, 16.

Die Gummikörper 3, 4 enthalten etwa parallel zu den Stützflächen 6, 7 verlaufende Zwischenbleche oder Kunststoff-Zwischenplatten 17, 18.

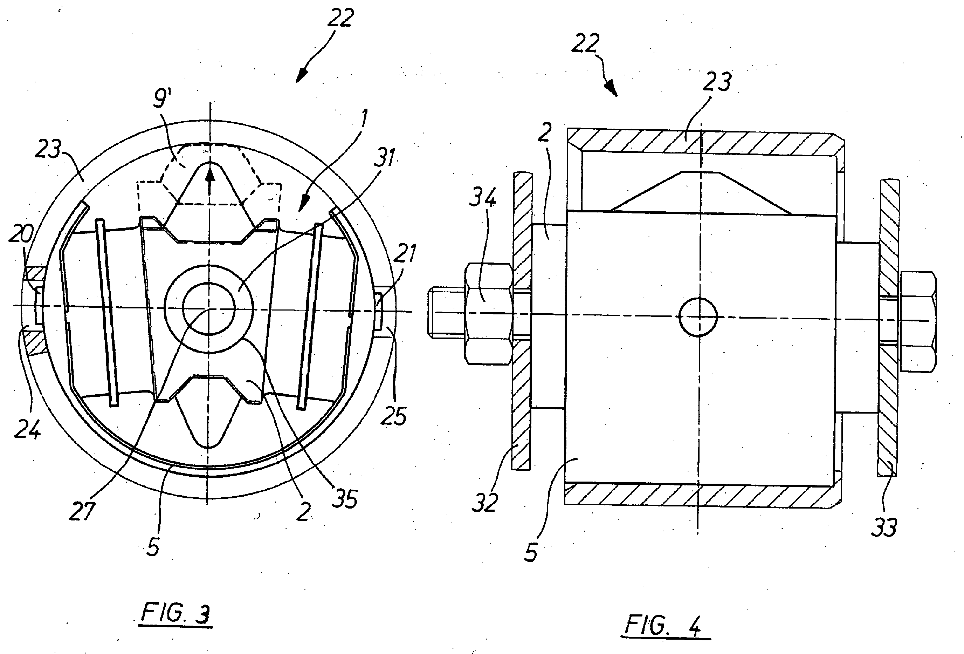

Die Kunststoffaußenschale 5 ist in einem unteren Außenschalenteilbereich 19, der zwischen den Gummikörpern 3, 4 liegt, durchgehend geschlossen und mit flacherer Auswölbung ausgebildet, im Vergleich zur Innenwölbung eines zugeordneten zylindrischen Lagergehäuseteilbereichs (sh. Fig. 3). Dagegen ist die Außenschalenform im Bereich der Gummikörper 3, 4 nach außen weisend zylindrisch entsprechend der Zylinderform des Lagergehäuses (sh. Fig. 3) ausgebildet. Dort sind zudem nach außen abstehende Rastnoppen 20, 21 angeformt.

Das Kunststoffinnenteil 2 ist axial länger als die Kunststoffaußenschale 5 und die Gummikörper 3, 4 (sh. Fig. 2).

In Fig. 3 ist ein fertig montiertes Fahrerhauslager 22 dargestellt, mit in einem zylindrischen Lagergehäuse 23 eingepressten Gummi-Kunststoffteil 1. Dabei sind die Rastnoppen 20, 21 der Kunststoffaußenschale 5 in zugeordnete Rastausnehmungen 24, 25 des Lagergehäuses 23 eingerastet.

Das Fahrerhauslager 22 ist bereits mit der statischen Belastung durch ein (nicht gezeigtes) Fahrerhaus dargestellt, wodurch die Achse 26 des Kunststoffinnenteils 2 und die Lagerachse 27 entsprechend der Lagergehäuseachse zusammenfallen.

Im eingepressten Montagezustand bei aufgebrachter Vorspannung sind die Anbindungsstellen 28, 29 des Außenschalenteilbereichs 19 an den Gummikörpern 3, 4 so relativ aufeinander zu verlagert, dass damit der Außenschalenteilbereich 19 im Vergleich zum Herstellzustand weiter ausgewölbt ist und unter Vorspannung angepasst an die Innenwölbung am zugeordneten Lagergehäuseteilbereich mit zylindrischer Form anliegt.

Weiter ist strichliert in Fig. 3 oben mit dem Bezugszeichen 9' der verformte Gummianschlag 9 bei einer stärkeren Lagerausfederung nach oben eingezeichnet. Dabei kommt nach Überwindung des freien Federwegs der Anschlag 9 in seine Wirkstellung, wobei die Federkennung mit einem weichen übergangslosen Einlauf beginnt, indem zunächst die pyramidenförmige Spitz/Linie 15 mit wenig Materialverformung wirkt. Bei weiterer Verlagerung und Vergrößerung des Anschlagwegs wird der Kanalinnenraum des Längskanals 11 zwischen den Anlageschultern 13, 13' mit Elastomermaterial gefüllt, welches sich dort abstützt und seitlich nicht mehr verdrängt werden kann, wie dies strichliert eingezeichnet ist. Dadurch steigt die Federkennung des Gummianschlags stark progressiv an.

Das Kunststoffinnenteil 2 ist mit einer zentralen Längsbohrung 30 versehen, in die ein Metallrohr als Achsbolzenrohr 31 eingesteckt ist. Das Achsbolzenrohr 31 ist zwischen zwei Lagerplatten 32, 33 verdrehfest mittels einer durchgehenden Verschraubung 34 eingespannt. Die Lagerplatten 32, 33 sind Bestandteil eines (nicht dargestellten) Lagerbocks, welcher mit dem Fahrerhaus verbunden ist. Das Lagergehäuse 23 ist mit dem Fahrzeugaufbau verbunden. Eine Gleitfläche 35 für die Schwenkung des Fahrerhauses ist damit zwischen der Umfangsfläche des metallischen Achsbolzenrohrs 31 und der Kunststoff-Innenfläche der Längsbohrung 30 geschaffen.

## Patentansprüche

1. Elastisches Fahrerhauslager für ein schwenkbares Fahrerhaus eines Nutzfahrzeugs,
bestehend aus einem Elastomer-Festkörperteil mit einem Innen-Festkörperteil (2), mit Elastomerkörpern (34) und mit einer Außenschale (5) und weiter bestehend aus einem rohrförmigen Lagergehäuse (23), wobei
das Innen-Festkörperteil und das Lagergehäuse der Krafteinleitung und Kraftausleitung dienen,
zwischen dem Innen-Festkörperteil und der Außenschale zu beiden Seiten des Innen-Festkörperteils die Elastomerkörper festhaftend angeordnet sind,
der Außendurchmesser des Elastomer-Festkörperteils im Herstellzustand zumindest in Teilbereichen größer ist als der Innendurchmesser des Lagergehäuses und somit das Elastomer-Festkörperteil im fertig montierten Montagezustand unter radialer Vorspannung in das Lagergehäuse eingepresst ist,
im Einbauzustand die Lagerachse etwa horizontal liegt, wobei die Elastomerkörper etwa in einer Horizontalebene gegenüberliegend und an etwa vertikal ausgerichteten Stützflächen des Innen-Festkörperteils angehaftet sind und sich dort abstützen dergestalt, dass im statisch belasteten Zustand die Längsmitte des Innen-Festkörperteils etwa im Bereich der Lagerachse liegt,
das Innen-Festkörperteil prismatisch ausgeführt ist und eine lagerachsparallele Bohrung aufweist zur Aufnahme eines Achsbolzens der Schwenkachse, und
am Innen-Festkörperteil gegenüberliegend versetzt zu den Elastomerkörpern wenigstens zwei radial wirkende Elastomeranschläge festhaftend angeordnet sind, die im dynamisch unbelasteten Einbauzustand in Vertikalrichtung jeweils nach unten und oben einen Anschlag-Abstand zur Lagergehäuseinnenwand und/oder zur Außenschaleninnenwand aufweisen,
**dadurch gekennzeichnet,**
- **dass** das Innen-Festkörperteil aus Kunststoff als Kunststoff-Innenteil (2) hergestellt ist mit einer Längsbohrung (30), in der unmittelbar der metallische Achsbolzen (31) für das schwenkbare Fahrerhaus aufgenommen ist mit einer Gleitfläche (35) zwischen der Achsbolzenumfangsfläche und der Bohrungsinnenfläche als Kunststofffläche,
- **dass** die Elastomerkörper (3, 4) und die Elastomeranschläge (9, 10) unmittelbar am Kunststoff-Innenteil (2) festhaftend angebracht sind, bevorzugt als Gummiteile anvulkanisiert sind,
- **dass** am Kunststoff-Innenteil (2) für die Elastomeranschläge (9, 10) jeweils ein im Einbauzustand nach oben bzw. unten weisender offener Längskanal (11, 12) mit schrägen Kanalseitenwänden als Anlageschultern (13, 13', 14, 14') für das Elastomermaterial eines verformten Elastomeranschlags (9, 10) ausgeformt ist, in dem jeweils der Elastomeranschlag (9, 10) walmdachförmig ausgebildet einliegt und am Kanalboden angehaftet ist, so dass zu Beginn eines Anschlagwegs beim Anliegen und Verformen der pyramidenförmigen Dachspitze/Linie ein sanfter Anschlag erfolgt, der im weiteren Anschlagweg mit zunehmender größerer Anschlagmaterialverformung sowie mit einem Ein- und Anliegen des Elastomermaterials im Längskanal (11, 12) und den schrägen Kanalwänden zu einer progressiv steigenden Abstützung führt.

2. Elastisches Fahrerhauslager nach Anspruch 1, **dadurch gekennzeichnet, dass** die Außenschale aus Kunststoff als Kunststoff-Außenschale (5) hergestellt ist.

3. Elastisches Fahrerhauslager nach Anspruch 1 oder 2, **dadurch gekennzeichnet,**
**dass** wenigstens ein Außenschalenteilbereich (19) zwischen den Elastomerkörpern (3, 4) durchgehend geschlossen ausgebildet ist,
**dass** dieser Außenschalenteilbereich (19) im Herstellzustand des Elastomer-Kunststoffteils (1) mit flacherer Auswölbung ausgebildet ist im Vergleich zur Innenwölbung des zugeordneten Lagergehäuseteilbereichs dergestalt,
**dass** im Montagezustand bei aufgebrachter Vorspannung die Anbindungsstellen (28, 29) des Außenschaltenteilbereichs (19) an den Elastomerkörpern (3, 4) relativ aufeinander zu verlagert sind und damit der Außenschalenteilbereich (19) im Vergleich zum Herstellzustand weiter ausgewölbt ist und unter Vorspannung angepasst an die Innenwölbung am zugeordneten Lagergehäuseteilbereich anliegt.

4. Elastisches Fahrerhauslager nach Anspruch 3, **dadurch gekennzeichnet, dass** ein unterer Außenschalenteilbereich (19) zwischen den gegenüberliegenden Elastomerkörpern (3, 4) durchgehend geschlossen ist und der gegenüberliegende obere Außenschalenteilbereich auch im eingepressten Montagezustand weit offen ist.

5. Elastisches Fahrerhauslager nach einem der Ansprüche 1 bis 4, **dadurch gekennzeichnet, dass** das Lagergehäuse (23) zylindrisch ist und die Außenschalenform im Bereich der Elastomerkörper (3, 4) entsprechend einem Zylinderabschnitt ausgebildet ist.

6. Elastisches Fahrerhauslager nach einem der Ansprüche 1 bis 5, **dadurch gekennzeichnet, dass** die Elastomerkörper (3, 4) mehrlagig ausgeführt sind und wenigstens ein Zwischenblech und/oder eine Kunststoff-Zwischenplatte (17) enthalten.

7. Elastisches Fahrerhauslager nach einem der Ansprüche 1 bis 6, **dadurch gekennzeichnet, dass** die Elastomerkörper (3, 4) vulkanisierte Gummikörper sind.

8. Elastisches Fahrerhauslager nach einem der Ansprüche 1 bis 7, **dadurch gekennzeichnet, dass** das eingepresste Elastomer-Kunststoffteil (1) im Lagergehäuse (23) mittels einer Klipp-Verbindung (20, 21, 24, 25) zwischen der Kunststoff-Außenschale und dem Lagergehäuse axial gesichert ist.

## Claims

1. Elastic cabin suspension for a rotatable driver's cabin in a commercial vehicle, comprising an elastomer solid section having an inner solid section (2) having elastomer bodies (34) and having an outer shell (5) and also comprising a tubular suspension (23), wherein,
the inner solid section and the suspension serve for the application and withdrawal of force,
between the inner solid section and the outer shell, the elastomer bodies are firmly arranged on both sides of the inner solid section,
the outer diameter of the elastomer solid section in the manufactured state is, at least in sections, greater than the inner diameter of the suspension, and thus the elastomer solid section in the completely assembled state is pressed into the suspension under the influence of radial pre-stressing,
in the installed state, the bearing axis lies approximately horizontally, wherein the elastomer bodies lie opposite at an approximately horizontal level and are adhered to approximately vertically aligned support surfaces of the inner solid section and are supported there in such a way that, in the statically loaded state, the longitudinal centre of the inner solid section is located approximately in the region of the bearing axis,
the inner solid section is formed prismatically and has a bore-hole located parallel to the bearing axis for receiving an axle bolt of the swivel axis, and
at least two radially functioning elastomeric stoppers are firmly fitted on the inner solid section, lying offset opposite from the elastomer bodies, which, in the dynamic unstressed installed state, each have an upwards and downwards stop space in the vertical direction to the suspension inner wall and/or to the outer shell inner wall,
**characterised in that**,
- the inner solid section is produced from plastic as a plastic inner section (2), having a longitudinal bore-hole (30) in which the metallic axle bolt (31) for the rotatable cabin is directly received with a sliding surface (35) between the axle bolt circumferential surface and the bore-hole internal surface as a plastic surface,
- the elastomer bodies (3,4) and the elastomeric stoppers (9,10) are applied with firm adhesion directly to the plastic inner section (2), preferably vulcanized as rubber parts.
- a respective open longitudinal channel (11, 12) with angular channel side walls, said channel pointing upwards or downwards in the assembled state, is moulded on the plastic inner section (2) for the elastomeric stoppers (9, 10) as bearing shoulders (13, 13', 14, 14') for the elastomer material of a deformed elastomeric stopper (9, 10), in which each elastomeric stopper (9,10) is loaded in hipped roof shape and adhered to the channel floor, such that, at the beginning of a stop path, during abutment and deforming of the pyramidal rooftop/line, a soft stoppage occurs, which leads to progressively increasing support further along the stop path with increasingly greater stopper material deformation, as well as with a loading and abutment of the elastomer materials in the longitudinal channel (11,12) and the angular channel walls.

2. Elastic cabin suspension according to claim 1, **characterised in that** the outer shell is produced from plastic as a plastic outer shell (5).

3. Elastic cabin suspension according to claim 1 or 2, **characterised in that**,
at least one outer shell section (19) between the elastomer bodies (3,4) is designed to be closed throughout,
this outer shell section (19), in the manufactured state of the elastomer plastic section (1), is designed with flatter curvature in comparison to the inner curvature of the associated suspension section, in such a way that,
in the assembled state, upon application of pre-stressing, the connection points (28, 29) of the outer shell section (19) on the elastomer bodies (3, 4) are to be shifted relative to one another, and thus the outer shell section (19) has greater curvature in comparison with the manufactured state, and, when pre-stressed, abuts on the associated suspension section adapted to the inner curvature.

4. Elastic cabin suspension according to claim 3, **characterised in that** a lower outer shell section (19) between the opposite elastomer bodies (3,4) is closed throughout and the opposite upper outer shell section is also wide open in the fitted assembled state.

5. Elastic cabin according to one of claims 1 to 4, **characterised in that** the suspension (23) is cylindrical and the outer shell shape in the region of the elastomer bodies (3, 4) is formed in accordance with a cylindrical section.

6. Elastic cabin according to one of claims 1 to 5, **characterised in that** the elastomer bodies (3, 4), have multiple layers and contain at least one intermediate sheet and/or a plastic intermediate plate (17).

7. Elastic cabin according to one of claims 1 to 6, **characterised in that** the elastomer bodies (3, 4) are vulcanized rubber bodies.

8. Elastic cabin according to one of claims 1 to 7, **characterised in that** the fitted elastomer plastic section (1) in the suspension (23) is axially secured between the plastic outer shell and the suspension by means of a clip connection (20, 21, 24, 25).

## Revendications

1. Support élastique pour cabine pivotable d'un véhicule utilitaire, constitué d'une partie de corps solide à base d'élastomère dotée d'une partie intérieure (2), de corps à base d'élastomère (3,4) et d'une coque extérieure (5), et constitué en outre d'un boîtier de logement (23) de forme tubulaire, sachant
que la partie intérieure de corps solide et le boîtier de logement servent à introduire et à évacuer une force,
que les corps à base d'élastomère sont disposés de manière à adhérer entre la partie intérieure de corps solide et la coque extérieure de part et d'autre de la partie intérieure de corps solide,
que le diamètre extérieur de la partie de corps solide à base d'élastomère est, dans l'état fabriqué, plus grand au moins dans des zones partielles que le diamètre intérieur du boîtier de support, la partie de corps solide à base d'élastomère étant ainsi insérée par compression, dans l'état final monté, sous l'action d'une précontrainte radiale, dans le boîtier de logement,
l'axe de support se trouve sensiblement horizontal dans l'état monté, sachant que les corps à base d'élastomère sont collés de manière à se faire face dans un plan horizontal et au niveau de surfaces de soutien, orientées sensiblement verticalement, de la partie intérieure de corps solide et prennent appui à cet endroit de telle manière que le centre de la longueur de la partie intérieure de corps solide se trouve approximativement dans la zone de l'axe de support dans l'état sollicité de manière statique,
que la partie intérieure de corps solide est de forme prismatique et présente un alésage parallèle à l'axe de support, apte à recevoir un pivot de l'axe de pivotement, et
qu'au moins deux butées à base d'élastomère à action radiale sont disposées de manière à adhérer au niveau de la partie intérieure de corps solide avec un décalage opposé par rapport aux corps à base d'élastomère, lesquelles butées présentent, dans l'état sans sollicitation dynamique, dans la direction verticale, respectivement vers le bas et le haut, une distance de butée par rapport à la paroi intérieure de boîtier de support et/ou par rapport à la paroi intérieure de coque extérieure,
**caractérisé en ce**
- **que** la partie intérieure de corps solide est fabriquée à partir de matière plastique sous la forme d'une partie intérieure (2) à base de plastique, avec un alésage longitudinal (30), dans lequel est directement logé le pivot (31) métallique pour la cabine pivotante, avec une surface coulissante (35) entre la surface périphérique de pivot et la surface intérieure d'alésage en matière plastique,
- en ce que les corps à base d'élastomère (3, 4) et les butées à base d'élastomère (9, 10) sont mis en place de manière à adhérer directement au niveau de la partie intérieure à base de plastique (2), de préférence sont vulcanisés en tant que parties en caoutchouc,
- en ce que respectivement un canal longitudinal (11, 12) ouvert orienté vers le haut ou le bas à l'état monté, doté de parois latérales de canal obliques en tant qu'épaulements d'appui (13, 13', 14, 14') pour le matériau à base d'élastomère d'une butée à base d'élastomère (9, 10) déformée est formé au niveau de la partie intérieure à base de plastique (2) pour les butées à base d'élastomère (9, 10), dans lequel canal longitudinal se trouve respectivement la butée à base d'élastomère (9, 10) réalisée de manière à présenter une forme de toit en croupe et adhère au niveau du fond du canal de sorte qu'au début du trajet de butée, en présence et en cas de formation de la pointe de toit/de la ligne présentant une forme pyramidale, une butée a lieu en douceur, qui conduit, par la suite, sur le trajet de butée, avec une déformation de plus en plus importante du matériau de butée ainsi qu'en présence du matériau à base d'élastomère dans le canal longitudinal (11, 12) et des parois de canal obliques, à un appui augmentant progressivement.

2. Support élastique de cabine de véhicule selon la revendication 1, **caractérisé en ce que** la coque extérieure est fabriquée à partir de matière plastique sous la forme d'une coque extérieure à base de matière plastique (5).

3. Support élastique de cabine de véhicule selon la revendication 1 ou 2, **caractérisé en ce**
**qu'**au moins une zone partielle de coque extérieure (19) est réalisée entre les corps à base d'élastomère (3, 4), de manière fermée en continu,
en ce que ladite zone partielle de coque extérieure (19) est réalisée, à l'état fabriqué de la partie en plastique à base d'élastomère (1), avec un bombement plat comparativement au bombement intérieur de la zone partielle associée de boîtier de support de telle manière,
**qu'**à l'état monté, dans le cas de l'application d'une précontrainte, les emplacements de liaison (28, 29) de la zone partielle de coque extérieure (19) sont déplacés les uns sur les autres au niveau des corps à base d'élastomère (3, 4), de telle sorte que la zone partielle de coque extérieure (19) est davantage bombée par rapport à l'état fabriqué et repose, de manière adaptée, sous l'effet de la précontrainte, au niveau du bombement intérieur, au niveau de la zone partielle associée de boîtier de support.

4. Support élastique de cabine de véhicule selon la revendication 3, **caractérisé en ce qu'**une zone partielle inférieure de coque extérieure (19) est fermée en continu entre les corps à base d'élastomère (3, 4) opposés, et **en ce que** la zone partielle de coque extérieure supérieure opposée est également très ouverte également dans l'état monté comprimé.

5. Support élastique de cabine de véhicule selon l'une quelconque des revendications 1 à 4, **caractérisé en ce que** le boîtier de support (23) est cylindrique, et **en ce que** la forme de coque extérieure est réalisée dans la zone des corps à base d'élastomère (3, 4) de manière à correspondre à une section cylindrique.

6. Support élastique de cabine de véhicule selon l'une quelconque des revendications 1 à 5, **caractérisé en ce que** les corps à base d'élastomère (3 4) sont réalisés de manière à présenter plusieurs couches, et **en ce qu'**ils comportent au moins une tôle intermédiaire et/ou une plaque intermédiaire à base de plastique (17).

7. Support élastique de cabine de véhicule selon l'une quelconque des revendications 1 à 6, **caractérisé en ce que** les corps à base d'élastomère (3, 4) sont des corps en caoutchouc vulcanisé.

8. Support élastique de cabine de véhicule selon l'une quelconque des revendications 1 à 7, **caractérisé en ce que** la partie en plastique à base d'élastomère (1) insérée par compression dans le boîtier de support (23) est bloquée de manière axiale entre la coque extérieure à base de matière plastique et le boîtier de support, au moyen d'un système d'assemblage par clipsage (20, 21, 24, 25).
